# EUROPEAN PATENT SPECIFICATION

(11) **EP 1 805 935 B1**
(45) Date of publication and mention of the grant of the patent: **09.03.2011**
(21) Application number: 04775082.3
(22) Date of filing: 08.10.2004
(51) Int. Cl.: H04L 12/24, H04L 29/14

(54) **PERSISTENT CONFIRMED CONFIGURATION METHOD**
VERFAHREN ZUR PERSISTENTEN BESTÄTIGTEN KONFIGURATION
PROCEDE DE CONFIGURATION CONFIRMEE PERSISTANTE

(43) Date of publication of application: 11.07.2007
(73) Proprietor: Telefonaktiebolaget LM Ericsson (publ), 164 83 Stockholm (SE)
(72) Inventor: LINDEIJER, Alexander, N-1389 Heggedal (NO); NISSEN, Per Erik Moldskred, N-3046 Drammen (NO)
(74) Representative: Vejgaard, Christian
(86) International application number: PCT/NO2004/000302
(87) International publication number: WO 2006/038809

(56) References cited:
- US-A1- 2004 193 564
- US-B1- 6 760 339

## Description

### Field of the Invention

The invention relates to updating/changes of network elements within data and/or telecommunication. More particularly it relates to a system and a method for remote configuration of one or more network elements over a packet switched network.

### Background of the invention

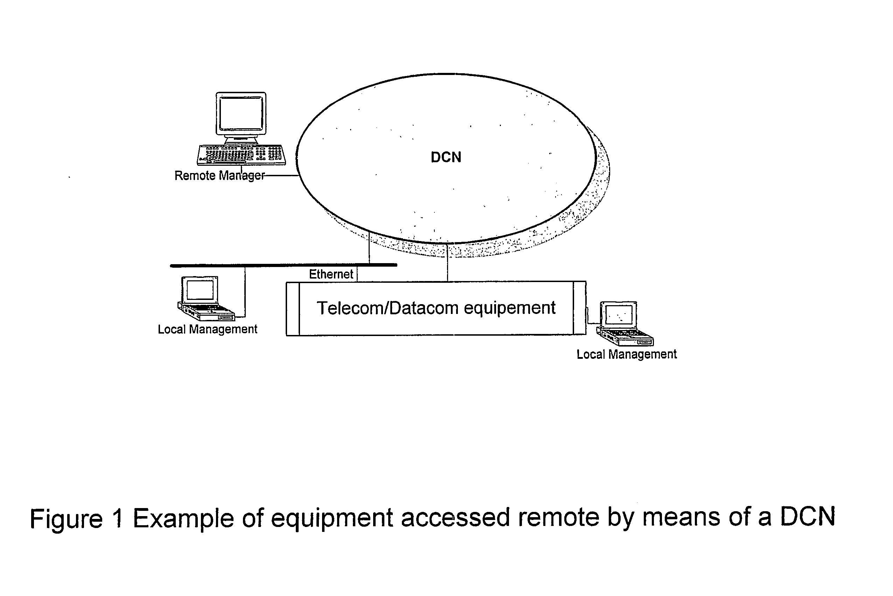

Data/telecom equipment is often managed remotely by sending commands over a DCN (Data Communication Network) as shown in figure 1. However remote configuration changes/updates can lead to missing contact with the equipment over the DCN. In that case an operator has to travel to the site where the equipment is located, which is both cumbersome and expensive.

In existing data/telecom equipment configuration there are mainly two ways to perform configuration changes/updates;
1.a Changes/updates are made to a volatile running configuration and need to be saved non-volatile explicitly by means of a "save" command. The equipment will then use the non-volatile configuration upon restart/power-up. This means that a restart, due to some kind of equipment failure, will not perform volatile configuration.
1.b Changes/updates in the configuration are directly made non-volatile. A restart will always lead to a state that incorporates the last configuration changes/updates.

Both methods however have the disadvantage that they don't recover from "unintended" mis-configuration.
a. When in method "1a" a configuration leads to loss of remote access to the equipment, the "save" command cannot be ordered, so the configuration changes/updates cannot be made persistent. A fallback to the configuration state where remote access was possible will only occur with a restart, which should seldom occur, activates the non-volatile configuration.
b. Making configuration automatically non-volatile, as in method "1b", means that a configuration that disrupts remote access will always be activated, leading to not-accessible equipment.

To overcome some of the problems above LM Ericsson AB has shown for a system operating with microwave transmission technology, the Mini Link Traffic Node™ Release 1, use of method "1a" with the rule that the equipment performs a restart, and the latest non-volatile configuration is reloaded, if a configuration change command isn't followed by another command within a certain period of time (Tsave). A "save" command then makes the configuration non-volatile.

Use of the method depicted in the section above results in the following problems;
the operator(s) have to send many "save" commands since every configuration change/update have to be "saved"
operator(s) may "forget" to save a configuration
the network element(s) misses the configuration due to restart following after expiration of the time period.

Prior art document US6760339 describes a distributed system comprising network subsystems. Each sub-system comprises a combination of non-volatile or persistent and volatile memory components. For new applications and application upgrades, a network management system, NMS, works with a software management system, SMS, service to implement a change while the computer system is running (hot upgrades or addictions). As a result, the SMS is capable of an automatic downgrade on the detection of an error. To allow for automatic downgrade, the SRMs (System Resiliency Master) to the SMS. The SMS may cause the system to revert to the old configuration and application (i.e., automatic downgrade) on any error or only for particular errors. The implementation of an upgrade can cause unexpected errors in the upgraded software, in other applications or in hardware. A new configuration database is generated and changes to the new configuration database are made in new tables. Old configuration database records and the original application files are not deleted or altered. In an embodiment where changes are made directly to configuration database, they are made only in non-persistent memory until committed. In an embodiment where changes are made to backup configuration database, the original configuration database remains unchanged. In this document it is reckoned that upgrades to one application may cause unexpected faults or errors in other software. If such a problem causes a system shut down and the configuration upgrade was stored in persistent storage, then the system, when powered back up, will experience the error again and shut down again. To address this concern, in one embodiment, the NMS and the master SMS periodically send messages to each other indicating they are executing appropriately. If the SMS does not receive one of these messages in a predetermined period of time, then the SMS knows the system has hung. Upgrades are made permanent by saving the new application software and new configuration database and DDL file in persistent storage and removing the old configuration data from memory 40 as well as persistent storage. As mentioned above, changes may be automatically saved in persistent storage as they are made in non-persistent memory (no automatic downgrade), or the user may choose to automatically commit an upgrade after a successful time interval lapses (evaluation mode). The time interval from upgrade to commitment may be significant. During this time, configuration changes may be made to the system. Since these changes are typically made in non-persistent memory, they will be lost if the system is rebooted prior to upgrade commitment. Instead, to maintain the changes, the user may request that certain configuration changes made prior to upgrade commitment be copied into the old configuration database in persistent memory. Alternatively, the user may choose to manually commit the upgrade at his or her leisure. In the manual mode, the user would ask the NMS to commit the upgrade and the NMS would inform the master SMS, for example, through a record in the SMS table.

### Summary of the invention

It is an object of the present invention to provide a method and a network element avoiding the above described problems.

The features defined in the independent claims enclosed characterize this method, respectively network element.

Further embodiments according to the present invention are defined in the dependent claims.

### Brief Description of the drawings

In order to make the invention more readily understandable, the discussion that follows will refer to the accompanying drawing.
Figure 1 shows an example of equipment accessed remote by means of a DCN,

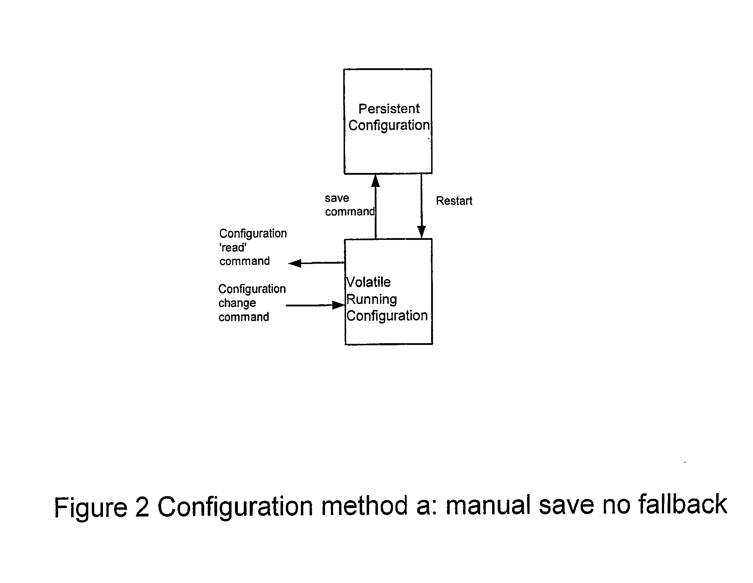

Figure 2 shows configuration method a: manual save no fall-back,

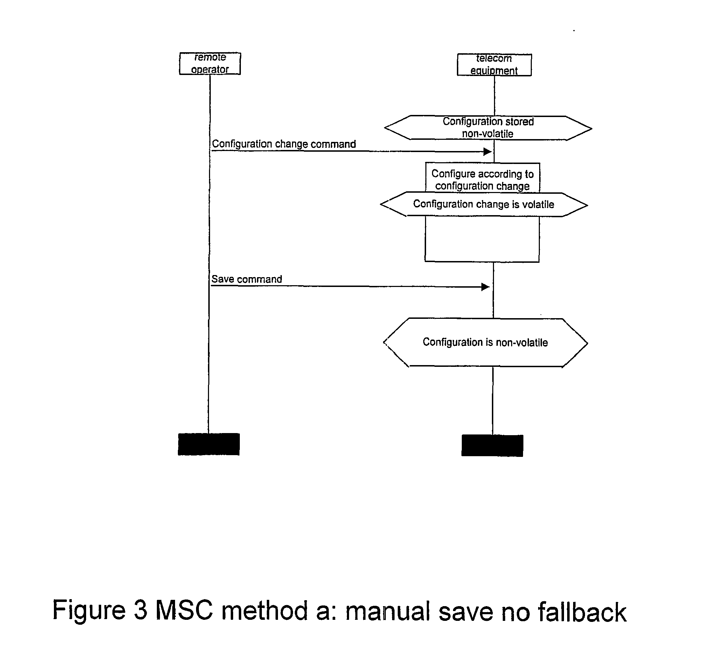

Figure 3 shows a message sequence chart (MSC) method a: manual save no fallback,

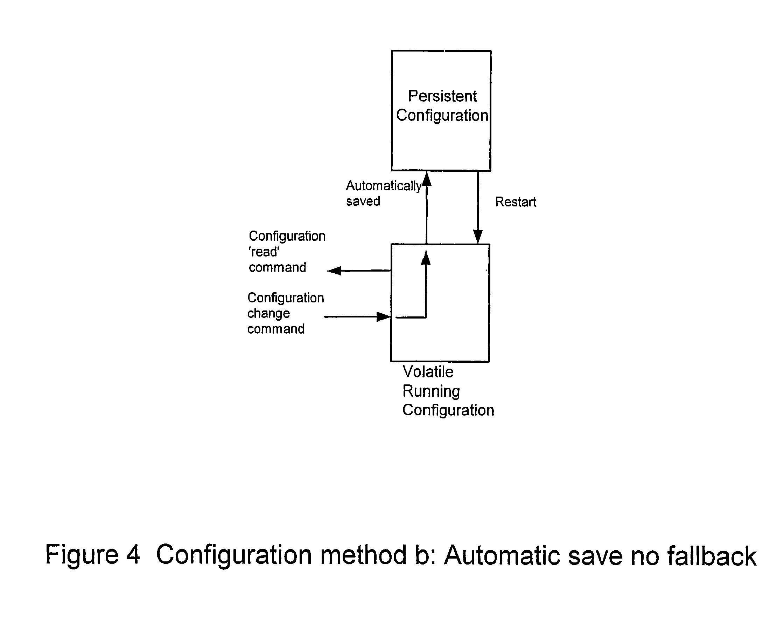

Figure 4 shows configuration method b: Automatic save no fallback,

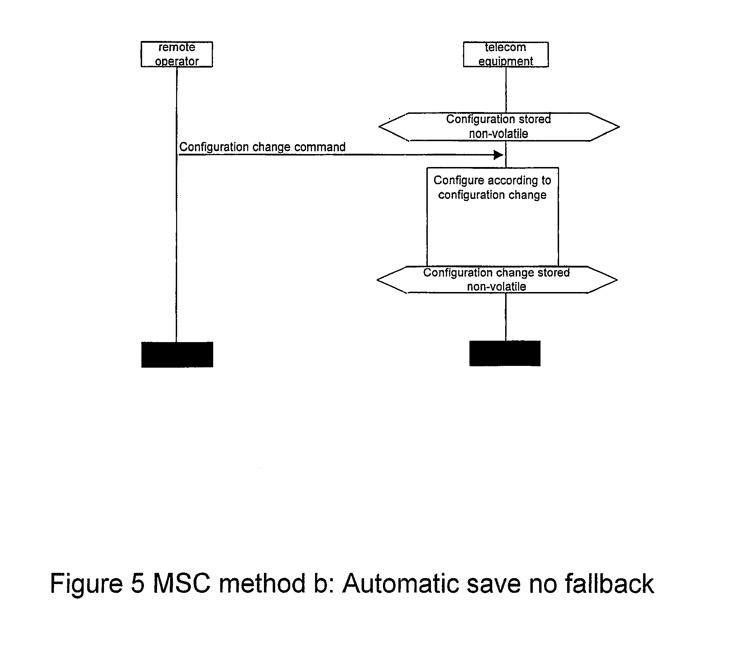

Figure 5 MSC method b: Automatic save no fallback,

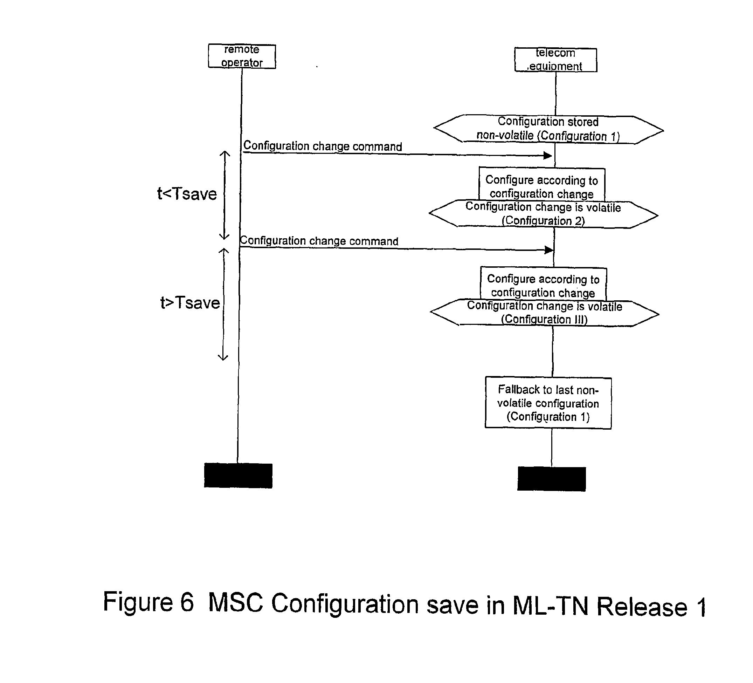

Figure 6 MSC Configuration save in ML-TN Release 1

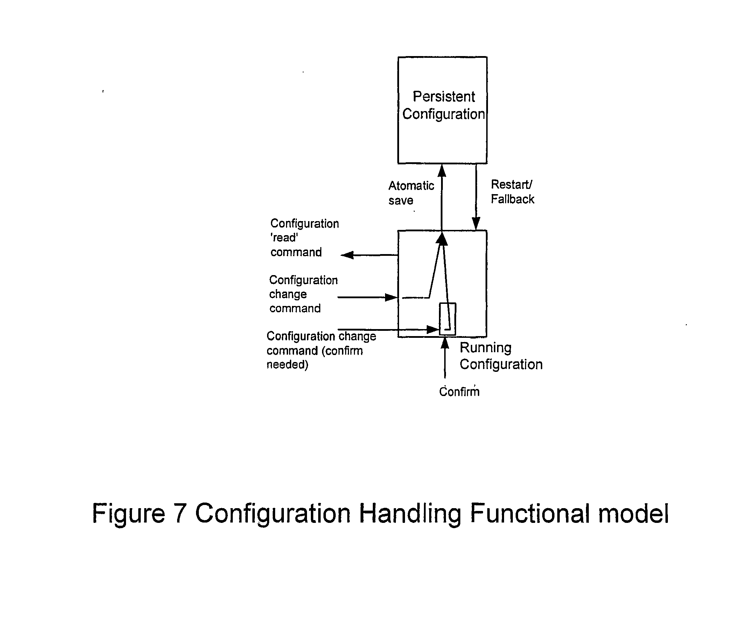

Figure 7 shows configuration Handling Functional model,
Figure 8 shows an example MSC of configuration changes/updates for Class I and II

### Detailed description of the invention

According to the present invention a method and a system is introduced that only needs the "save" command for configuration changes/updates that really can disrupt remote access to the equipment during configuration updates. All other configuration changes/updates are stored non-volatile automatically.

A Major principle for the present invention is the classification of configuration changes/updates to the equipment. Depending on the class of the configuration change it is handled in a different way, i.e. non-volatile storage directly or after manual/automatic confirmation of the configuration with certain confirm time. Not confirming within the confirm time leads to re-establishment of the configuration for which the equipment had remote access.

An enhancement of the invention is that in case a-configuration needs to be confirmed in order to verify DCN connectivity that the equipment automatically tries to establish a connection, e.g. a ping command is sent to an IP-address.

### Detailed Technical Description of the Invention

The "save" command as known from the above mentioned Mini Link Traffic Node™ Release 1, from Telefonaktiebolaget L.M. Ericsson AB had actually two intentions:
2.a Confirmation that remote access to the equipment still existed.
2.b Saving the volatile running configuration to a non-volatile start-up configuration.

The two intentions above are, according to the present invention separated into a confirmation command and an automatic non-volatile storage of configuration changes/updates. Not receiving a "confirm" command within a certain time (Tconfirm) leads to a restart and fall-back to the last non-volatile configuration that re-establishes remote contact with the equipment.

Only configuration changes/updates that can disrupt remote access to the equipment needs to be confirmed. As long as this kind of configuration is not confirmed the configuration will be volatile.

Consequently, a classification system for the configuration commands can be a tool for flexible and neat handling of such commands, thus avoiding the problems known from the prior art. The configuration changes/updates can be classified as shown in table 1. Persistence means that configuration must survive a restart of the NE. Whilst confirm means that the configuration can lead to lost of DCN connection and therefore needs some kind of check from the operator or the network element itself for DCN access.

**Table 1 Configuration classification**

| | **Persistent** | **Non persistent** |
|---|---|---|
| **Confirm** | Class I | Class III |
| **Non-confirm** | Class II | Class IV |

| | | |
|---|---|---|
| I. Persistent -Confirm Changes/updates that need to be persistent and confirmed, e.g. ip-address, loop on a traffic interface carrying DCN. A fallback is performed if the changes/updates are not confirmed within a specified time interval. II. Persistent-nonConfirm Changes/updates that need to be persistent but not confirmed, e.g. cross-connects. These changes/updates can be made persistent immediately without interference of the operator/manager. III. nonPersistent-Confirm Changes/updates that need not to be persistent but confirmed. IV. nonPersistent-nonConfirm Changes/updates that neither need to be persistent nor confirmed, e.g. set of an activation object for configuration load. These aren't actual configuration changes/updates. These are configuration commands used to perform an action. For these "changes/updates" nothing has to be done. | | |

This means that persistency and confirmation of a configuration are in principle two independent dimensions that should not be implemented by one command because that covers only the class I.

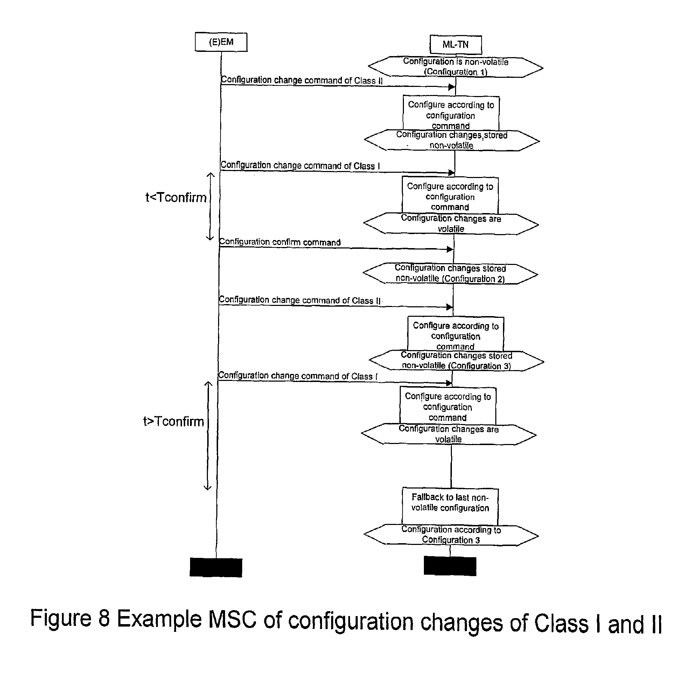

Figure 8 shows an example MSC (Message Sequence Charts) for configuration changes/updates that do and don't require a confirmation.

### Implementation of a preferred embodiment of the invention

In the prior art the non-volatile configuration was stored as one big file occupying a number of reserved sectors in the flash memory.

According to the present invention the saving of the configurations will happen automatically and it will happen more often. In order to minimize the expenditure of time for storing of configurations and to reduce wear-out of the flash memory configurations are divided into several small files using JFFS (Journaling Flash File System 2).

### Advantages of the Invention

Advantages of the invention over other solutions are:
3.a The vast majority of the configuration changes/updates are made non-volatile automatically. The operator doesn't need to and cannot forget issue the "save" command.
3.b For specific configuration commands a fallback mechanism prevent the operator from missing remote access to the equipment.
3.c Saving the running configuration could take quite some time since the whole configuration is stored. According to the present invention only a small part of the configuration is stored, which takes less time.

Note that while in the foregoing, there has been provided a detailed description of particular embodiments of the present invention, it is to be understood that equivalents are to be included within the scope of the invention as claimed.

### Abbreviations

| | |
|---|---|
| DCN | Data Communications Network |
| IP | Internet Protocol |
| JFFS2 | Journaling Flash File System 2 |
| ML-TN | MINI-LINK Traffic Node |
| NE | Network Element |
| SNMP | Simple Network Management Protocol |
| Tconfirm | Time in which configuration changes/updates of Class I and III need to be confirmed in order not to fall back to the old configuration.(ML-TN Release 2) |
| Tsave | Time in which the equipment needs to receive a new command or a save command in order not to fall back to the old configuration.(ML-TN Release 1) |

## Claims

1. Method for remote configuration of at least one network element (ML-TN) over a packet switched communication network from a node ((E)EM; NE) from which an operator can command configuration changes and confirm configuration changes;
the network element being adapted for either storing a configuration change in a non-volatile way or storing a configuration change in a volatile way; and
wherein the network element (ML-TN) is adapted for setting a timer when a configuration change command is given to the network element, the timer subsequently expiring at a given first expiration period (Tconfirm), whereby if a configuration confirm command reaches the network element before expiration of the first expiration period, a previously given configuration change stored in a volatile way are stored in a non-volatile way, and wherein a fallback to a last non-volatile configuration is automatically performed if no configuration confirm command is given before the expiration of the first expiration period;
wherein some configuration changes for being rendered persistent, need to be confirmed, and wherein other changes for being rendered persistent, need not be confirmed, persistent meaning that the configuration change must survive a restart of the network element;
configuration change commands are classified into at least two predefined classes, a first class (I) being associated with configuration changes that need to be persistent and need to be confirmed, and a second class (II) associated with configuration changes that need to be persistent, but which do not need to be confirmed;
and wherein a given configuration change command is belonging to one class of at least the first class or the second class; wherein
if a configuration change command is belonging to the first class (I), the configuration change initially being stored in a volatile way upon reception of the configuration change command in the network element, said configuration change stored in a volatile way being stored in a non-volatile way if a configuration confirm command is received before expiration of the first expiration period; and
if a configuration change command is belonging to the second class (II), said configuration change being directly stored in a non-volatile way, without needing the reception of a configuration confirmation command.

2. Method according to claim 1, wherein a further class (IV) is provided that may be associated with a configuration change command relates to configuration changes that neither need to be persistent nor need to be confirmed.

3. Network element (ML-TN) adapted for being remotely configured over a packet switched communication network from a node ((E)EM; NE) from which an operator can command configuration changes and confirm configuration changes;
the network element being adapted for either storing a configuration change in a non-volatile way or storing a configuration change in a volatile way; and
wherein the network element (ML-TN) is adapted for setting a timer when a configuration change command is given to the network element, the timer subsequently expiring at a given first expiration period (Tconfirm), whereby if a configuration confirm command reaches the network element before expiration of the first expiration period, a previously given configuration change stored in a volatile way are stored in a non-volatile way, and wherein a fallback to a last non-volatile configuration is automatically performed if no configuration confirm command is given before the expiration of the first expiration period;
wherein some configuration changes for being rendered persistent, need to be confirmed, and wherein other changes for being rendered persistent, need not be confirmed, persistent meaning that the configuration change must survive a restart of the network element;
configuration change commands are classified into at least two predefined classes, a first class (I) being associated with configuration changes that need to be persistent and need to be confirmed, and a second class (II) associated with configuration changes that need to be persistent, but which do not need to be confirmed;
and wherein a given configuration change command is belonging to one class of at least the first class (I) or the second (II) class; wherein
if a configuration change command is belonging to the first class (I), the network element being adapted to operate such that the configuration change is initially being stored in a volatile way upon reception of the configuration change command in the network element, said configuration change stored in a volatile way being stored in a non-volatile way if a configuration confirm command is received before expiration of the first expiration period; and
if a configuration change command is belonging to the second class (II), the network element being adapted to operate such that said configuration change is being directly stored in a non-volatile way, without needing the reception of a configuration confirmation command.

4. Network element according to claim 3, wherein a further class (IV) is provided that may be associated with a configuration change command relates to configuration changes that neither need to be persistent nor need to be confirmed.

5. System comprising a node ((E)EM; NE) from which an operator can command configuration changes and confirm configuration changes, the system comprising a network element according to claim 3-4, **characterized in that** update commands includes cross connect commands.

6. System according to claim 5,
**characterized in that** the configurations are divided into more than one file.

7. System according to claim 6,
**characterized in that** the division of configurations into more than one file is executed by the use of Journal Flash File System JFFS.

8. System according to any of the previous claims 5 - 7, **characterized in that** the one or more network elements can be one of the following:
one or more Traffic nodes,
one or more Digital Cross Connects, DXC's,
one or more add drop multiplexers, ADM's.
one or more Terminal Multiplexers, TM's,
one or more data communication hubs,
one or more data or telecommunication switches, and
one or more data or telecommunication routers.

9. System according to any of claims 5 - 8,
**characterized in that** the communication network is a data communication network, DCN.

## Revendications

1. Procédé pour la configuration à distance d'au moins un élément de réseau (ML-TN) sur un réseau de communication à commutation de paquets à partir d'un noeud ((E)EM ; NE) à partir duquel un opérateur peut commander des changements de configuration et confirmer des changements de configuration ;
l'élément de réseau étant conçu soit pour mémoriser un changement de configuration d'une manière non volatile, soit pour mémoriser un changement de configuration d'une manière volatile ; et
dans lequel l'élément de réseau (ML-TN) est conçu pour paramétrer un registre d'horloge lorsqu'une commande de changement de configuration est donnée à l'élément de réseau, le registre d'horloge arrivant en fin de comptage par la suite lors d'une première période de fin de comptage donnée (Tconfirm), moyennant quoi, si une commande de confirmation de configuration atteint l'élément de réseau avant la fin de la première période de fin de comptage, un changement de configuration précédemment effectué mémorisé d'une manière volatile est mémorisé d'une non volatile, et dans lequel un repli vers une dernière configuration non volatile est effectué automatiquement si aucune commande de confirmation de configuration n'est donnée avant la fin de la première période de fin de comptage;
dans lequel certains changements de configuration, pour devenir permanents, doivent être confirmés, et dans lequel d'autres changements, pour devenir permanents, ne doivent pas être confirmés, le terme permanent signifiant que le changement de configuration doit survivre à une redémarrage, de l'élément de réseau ;
les commandes de changement de configuration sont classées en au moins deux catégories prédéfinies, une première catégorie (I) étant associée aux changements de configuration qui doivent être permanents et qui doivent être confirmés et une deuxième catégorie (II) étant associée aux changements de configuration qui doivent être permanents, mais qui ne doivent pas être confirmés ;
et dans lequel une commande de changement de configuration donnée appartient à une catégorie d'au moins la première catégorie ou la deuxième catégorie ; dans lequel
si une commande de changement de configuration appartient à la première catégorie (I), le changement de configuration étant initialement mémorisé d'une manière volatile après la réception de la commande de changement de configuration dans l'élément de réseau, ledit changement de configuration mémorisé d'une manière volatile étant mémorisé d'une manière non volatile si une commande de confirmation de configuration est reçue avant la fin de la première période de fin de comptage; et
si une commande de changement de configuration appartient à la deuxième catégorie (II), ledit changement de configuration étant directement mémorisé d'une manière non volatile, sans nécessiter la réception d'une commande de confirmation de configuration.

2. Procédé selon la revendication 1, dans lequel une autre catégorie (IV) est prévue qui peut être associée à une commande de changement de configuration concernant des changements de configuration qui ne doivent être ni permanents, ni confirmés.

3. Elément de réseau (ML-TN) conçu pour être configuré à distance sur un réseau de communication à commutation de paquets à partir d'un noeud ((E)EM ; NE) à partir duquel un opérateur peut commander des changements de configuration et confirmer des changements de configuration ;
l'élément de réseau étant conçu soit pour mémoriser un changement de configuration d'une manière non volatile, soit pour mémoriser un changement de configuration d'une manière volatile ; et
dans lequel l'élément de réseau (ML-TN) est conçu pour paramétrer un registre d'horloge lorsqu'une commande de changement de configuration est donnée à l'élément de réseau, le registre d'horloge arrivant par la suite en fin de comptage lors d'une première période de fin de comptage donnée (Tconfirm), moyennant quoi, si une commande de confirmation de configuration atteint l'élément de réseau avant la fin de la première période de fin de comptage, un changement de configuration donné précédemment mémorisé d'une manière volatile est mémorisé d'une manière non volatile, et dans lequel un repli vers une dernière configuration non volatile est effectué automatiquement si aucune commande de confirmation de configuration n'est donnée avant la fin de la première période de fin de comptage ;
dans lequel certains changements de configuration, pour devenir permanents, doivent être confirmés, et dans lequel d'autres changements, pour devenir permanents, ne doivent pas être confirmés, le terme permanent signifiant que le changement de configuration doit survivre à un redémarrage de l'élément de réseau;
les commandes de changement de configuration sont classées en au moins deux catégories prédéfinies, une première catégorie (I) étant associée aux changements de configuration qui doivent être permanents et qui doivent être confirmés, et une deuxième catégorie (II) étant associée aux changements de configuration qui doivent être permanents, mais qui ne doivent pas être confirmés ;
et dans lequel une commande de changement de configuration donnée appartient à une catégorie d'au moins la première catégorie (I) ou la deuxième catégorie (II) ; dans lequel
si une commande de changement de configuration appartient à la première catégorie (I), l'élément de réseau étant conçu pour fonctionner de sorte que le changement de configuration soit initialement mémorisé d'une manière volatile après la réception de la commande de changement de configuration dans l'élément de réseau, ledit changement de configuration mémorisé d'une manière volatile étant mémorisé d'une manière non volatile si une commande de confirmation de configuration est reçu avant la fin de la première période de fin de comptage; et
si une commande de changement de configuration appartient à la deuxième catégorie (II), l'élément de réseau étant conçu pour fonctionner de sorte que ledit changement de configuration soit directement mémorisé d'une manière non volatile, sans nécessiter la réception d'une commande de confirmation de configuration.

4. Elément de réseau selon la revendication 3, dans lequel une autre catégorie (IV) est prévue qui peut être associée à une commande de changement de configuration concernant des changements de configuration qui ne doivent être ni permanents ni confirmés.

5. Système comprenant un noeud ((E)EM ; NE) à partir duquel un opérateur peut commander des changements de configuration et confirmer des changements de configuration, le système comprenant un élément de réseau selon les revendications 3 et 4,
**caractérisé en ce que** les commandes de mise à jour comprennent des commandes d'interconnexion.

6. Système selon la revendication 5,
**caractérisé en ce que** les configurations sont divisées en plusieurs fichiers.

7. Système selon la revendication 6,
**caractérisé en ce que** la division des configurations en plusieurs fichiers est effectuée en utilisant le système JFFS, système de fichiers journalisé pour flash.

8. Système selon l'une quelconque des revendications 5 à 7 précédentes,
**caractérisé en ce que** lesdits un ou plusieurs éléments de réseau peuvent être l'un des éléments suivants :
un ou plusieurs noeuds de trafic,
un ou plusieurs dispositifs d'interconnexion numérique, DXC
un ou plusieurs multiplexeurs d'insertion-extraction, ADM,
un ou plusieurs multiplexeurs terminaux, TM,
un ou plusieurs concentrateurs de communication de données,
un ou plusieurs commutateurs de données ou de tétécommunication, et
un ou plusieurs routeurs de données ou de télécommunication.

9. Système selon l'une quelconque des revendications 5 à 8,
**caractérise en ce que** le réseau de communication est un réseau de communication de données, DCN.

## Patentansprüche

1. Verfahren für entfernte Konfiguration mindestens eines Netzelements (ML-TN) über ein paketvennitteltes Kommunikationsnetz von einem Knoten ((E)EM; NE), von dem ein Operator Konfigurationsänderungen befehlen und Konfigurationsänderungen bestätigen kann;
wobei das Netzelement zum entweder Speichern einer Kolifigurationsänderung in einer nichtflüchtigen Weise oder Speichern einer Konfigurationsänderung in einer flüchtigen Weise angepasst ist; und
wobei das Netzelement (ML-TN) zum Einstellen eines Timers angepasst ist, wenn ein Konfigurationsänderungsbefehl an das Netzelement gegeben wird, wobei der Timer anschließend bei einer gegebenen ersten Ablaufperiode (Tconfirm) abläuft, wobei, wenn ein Konfigurationbestätigungsbefehl das Netzelement vor Ablauf der ersten Ablaufperiode erreicht, eine vorher gegebene Konfigurationsänderung, die in einer flüchtigen Weise gespeichert ist, in einer nichtflüchtigen Weise gespeichert wird, und wobei ein Rückfall auf eine letzte nichtflüchtige Konfiguration automatisch durchgeführt wird, wenn kein Konfigurationbestätigungsbefehl vor dem Ablauf der ersten Ablaufperiode gegeben wird;
wobei einige Konfigurationsänderungen, um als andauernd angesehen zu werden, bestätigt werden müssen, und wobei andere Änderungen, um als andauernd angesehen zu werden, nicht, bestätigt werden müssen, wobei andauernd bedeutet, dass die Konfigurationsänderung einen Neustart des Netzelements überdauern muss;
wobei Konfigurationsänderungsbefehle in mindestens zwei im Voraus definierte Klassen klassifiziert werden, einer ersten Klasse (I), die mit Konfigurationsänderungen assoziiert ist, die andauernd sein müssen und bestätigt werden müssen, und einer zweiten Klasse (II), die mit Konfigurationsänderungen assoziiert ist, die andauernd sein müssen, die aber nicht bestätigt werden müssen;
und wobei ein gegebener Konfigurationsänderungsbeiehl zu einer Klasse von mindestens der ersten Klasse oder der zweiten Klasse gehört, wobei
wenn ein Konfigurationsänderungsbefehl zu der ersten Klasse (I) gehört, die Konfigurationsänderung anfänglich in einer flüchtigen Weise nach Empfang des Konfigurationsänderungsbefehls in dem Netzelement gespeichert wird, wobei die Konfigurationsänderung, die in einer flüchtigen Weise gespeichert wurde, in einer nichtflüchtigen Weise gespeichert wird, wenn ein Konfigurationbestätigungsbefehl vor Ablauf der ersten Ablaufperiode empfangen wird; und
wenn ein Konfigurationsänderungsbefehl zu der zweiten Klasse (II) gehört, die Konfigurationsänderung direkt in einer nichtflüchtigen Weise gespeichert wird, ohne den Empfang eines Konfigurationbestätigungsbefehls zu erfordern.

2. Verfahren nach Anspruch 1, wobei eine weitere Klasse (IV) bereitgestellt wird, die mit einem Konfigurationsänderungsbefehl assoziiert werden kann, der zu Konfigurationsänderungen in Beziehung steht, die weder andauernd sein müssen noch bestätigt werden müssen.

3. Netzelement (ML-TN), das angepasst ist für entfernte Konfiguration über ein paketvermitteltes Kommunikationsnetz von einem Knoten ((E)EM; NE), von dem ein Operator Konfigurationsänderungen befehlen und Konfigurationsänderungen bestätigen kann;
wobei das Netzelement zum entweder Speichern einer Konfigurationsänderung in einer nichtflüchtigen Weise oder Speichern einer Konfigurationsänderung in einer flüchtigen Weise angepasst ist; und
wobei das Netzelement (ML-TN) zum Einstellen eines Timers angepasst ist, wenn ein Konfigurationsänderungsbefehl an das Netzelement gegeben wird, wobei der Timer anschließend bei einer gegebenen ersten Ablaufperiode (Tconfirm) abläuft, wobei, wenn ein Konfigurationbestätigungsbefehl das Netzelement vor Ablauf der ersten Ablaufperiode erreicht, eine vorher gegebene Konfigurationsänderung, die in einer flüchtigen Weise gespeichert ist, in einer nichtflüchtigen Weise gespeichert wird, und wobei ein Rückfall auf eine letzte nichtflüchtige Konfiguration automatisch durchgerührt wird, wenn kein Konfigurationbestätigungsbefehl vor dem Ablauf der ersten Ablaufperiode wird;
wobei einige Konfigurationsänderungen, um als andauernd angesehen zu werden, bestätigt werden müssen, und wobei andere Änderungen, um als andauernd angesehen zu werden, nicht bestätigt werden müssen, wobei andauernd bedeutet, dass die Konfigurationsänderung einen Neustart des Netzelements überdauern muss;
wobei Konfigurationsändenrungsbefehle in mindestens zwei im Voraus definierte Klassen klassifiziert werden, einer ersten Klasse (I), die mit Konfigurationsänderungen assoziiert ist, die andauernd sein müssen und bestätigt werden müssen, und einer zweiten Klasse (II), die mit Konfigtirationsänderungen assoziiert ist, die andauernd sein müssen, die aber nicht bestätigt werden müssen;
und wobei ein gegebener Konfigurationsänderungsbefeht zu einer Klasse von mindestens der ersten Klasse (I) oder der zweiten (II) Klasse gehört; wobei
wenn ein Konfigurationsänderungsbefehl zu der ersten Klasse (I) gehört, das Netzelement angepasst ist, um derart zu operieren, dass die Konfigurationsänderung anfänglich in einer flüchtigen Weise nach Empfang des Konfigurationsänderungsbefehls in dem Netzelement gespeichert wird, wobei die Konfigurationsändertung, die in einer flüchtigen Weise gespeichert wurde, in einer nichtflüchtigen Weise gespeichert wird, wenn ein Konfigurationbestätigungsbefehl vor Ablauf der ersten Ablaufperiode empfangen wird; und
wenn ein Konfigurationsänderungsbefehl zu der zweiten Klasse (II) gehört, das Netzelement ist, um derart zu operieren, dass die Konfigurationsänderung direkt in einer nichtflüchtigen Weise gespeichert wird, ohne den Empfang eines Konfiguratioabestätigungsbefehls zu erfordern.

4. Netzelement nach Anspruch 3, wobei eine weitere Klasse (IV) bereitgestellt wird, die mit einem Konfigurationsänderungsbefehl assoziiert werden kann, der zu Konfigurationsänderungen in Beziehung steht, die weder andauern sein müssen noch bestätigt werden müssen.

5. System, umfassend einen Knoten ((E)EM; NE), von dem ein Operator Konfigurationsänderungen befehlen und Konfigurationsandenrngen bestätigen kann, das System umfassend ein Netzelement nach Anspruch 3-4,
**dadurch gekennzeichnet, dass** Aktualisierungsbefehle Crossconnectbefehlc entfalten.

6. System nach Anspruch 5,
**dadurch gekennzeichnet**, die Konfigurationen in mehr als eine Datei aufgeteilt sind.

7. System nach Anspruch 6,
**dadurch gekennzeichnet**, die Aufteilung von Konfigurationen in mehr als eine Datei durch die Verwendung des Journal Flash File Systems, JFFS, ausgeführt wird.

8. System nach der vorstehenden Ansprüche 5-7,
**dadurch gekennzeichnet**, das eine oder mehr Netzelemente eines der folgenden sein können:
ein oder mehr Verkehrsknoten,
ein oder mehr Digitat-Crossconnects, DXC,
ein oder Abzweigmultiplexer, ADM,
ein oder mehr Terminalmultiplexer, TM,
ein oder mehr Datenkommunikationsverteiler,
ein oder mehr Daten- oder Telekommunikationsvermittlungen und
ein oder mehr Daten- oder Telekommunikationssystemrouter.

9. System nach der Ansprüche 5-8,
**dadurch gekennzeichnet, dass** das Kommunikationsnetz ein Datenkommunikationsnetz, DCN, ist.
